# EUROPEAN PATENT APPLICATION

(11) **EP 2 058 282 A2**
(43) Date of publication of application: **13.05.2009**
(21) Application number: 08168726.1
(22) Date of filing: 10.11.2008
(51) Int. Cl.: C02F 1/46, C02F 1/467, C02F 1/50, C02F 1/76, C02F 1/00

(54) **Monitoring and treating swimming pool water**

(30) Priority: 08.11.2007 GB 0721906
(71) Applicant: Morrison, Richard Carter, Ventnor Hampshire PO38 2LG (GB)
(72) Inventor: Morrison, Richard Carter, Ventnor Hampshire PO38 2LG (GB)
(74) Representative: Targett, Kenneth Stanley

(57) **Abstract**

In one aspect of the invention, chlorinated swimming pool water in which chloramine may be present is monitored and treated by: sensing the chlorine level of the water and, in dependence thereon, adding chlorine to the water; spectrophotometrically sensing a mixture of the water and a spectrophotometric reagent that is sensitive to chloramine and, in dependence thereon, modifying the addition of chlorine. In another aspect of the invention, swimming pool water is monitored and treated by: spectrophotometrically sensing a mixture of the water and a spectrophotometric reagent that is sensitive to copper or silver ions and, in dependence thereon, adding copper or silver ions to the water. Due to the use of spectrophotometry, the level of chloramine or copper or silver ions in the water can be accurately and reliably determined.

## Description

This invention relates to the monitoring and treatment of swimming pool water. The invention was conceived for use with public swimming pools, but is also applicable to other swimming pools.

It is well known that swimming pool water can become infected with legionella, cryptosporidium and other pathogens, and that algae can grow in pool water. A general aim of the present invention is to deal with these problems.

It is also well known that chlorine can be used to kill bacteria and break down organic material in pool water. Chlorine can be added to the water as chlorine gas, as part of a compound in solid form which produces chlorine when it dissolves, as part of a compound in liquid form, or by dissolving common salt in the pool water and then electrolysing the salty water. Chlorine can be consumed in a swimming pool at a relatively fast but variable rate depending on the levels of bacteria and algae in the pool, the pool temperature, and the amount of sunlight shining on the water. The chlorination of swimming pools, in terms of raw material costs and/or electricity costs, is relatively expensive. It is therefore desirable to add no more chlorine than is required, typically 3 ppm (parts per million), but it is also then necessary to monitor the level of chlorine in the pool closely. A by-product of chlorination of swimming pools is that the chlorine can react with uric acid contained in the body sweat and urine of swimmers to produce chloramine. It is chloramine that usually produces the chlorine smell of swimming pools, rather than chlorine per se, and it is chloramine that causes swimmers' eyes to itch. It is known that an effective way of breaking down chloramine is to increase the chlorine level in the pool water, for example, to 5 or 6 ppm. However, for reasons of cost, this is preferably done only when required. Especially insofar as large public swimming pools are concerned, it is preferable for the chlorination of the pool water to be controlled automatically. However, difficulty arises in monitoring the level of chloramine in the pool water automatically, reliably and accurately. An aim of the first and second aspects of the invention, or least of specific embodiments of them, is to deal with this problem.

In accordance with a first aspect of the present invention, there is provided a method of monitoring and treating chlorinated swimming pool water in which chloramine may be present.

The method comprises: sensing a value of a parameter of a sample of the water dependent on the proportion of chlorine in the water; adding chlorine to the water at a rate determined at least in part from the sensed value; mixing a sample of the water with a spectrophotometric reagent that is sensitive to chloramine; spectrophotometrically sensing the mixture to produce a result dependent on the proportion of chloramine in the water; and modifying the rate of the addition of chlorine to the water in dependence upon the chloramine sensing result. Primarily, the method would be used to shock-dose the pool water with chlorine when a high proportion of chloramine is detected in the water. Due to the use of spectrophotometry, the proportion of chloramine in the water can be accurately and reliably determined.

Common salt is preferably dissolved in the pool water and chlorine is preferably added to the water by electrolysis of the salty water.

Although the method could be performed as a one-off, preferably values of the chlorine dependent parameter are repeatedly sensed, for example about once every minute, and the rate of the addition of chlorine is repeatedly determined, so that the method is performed continuously or quasi-continuously.

Preferably, in a first mode of operation (which can be thought of as a normal mode), the rate of chlorine addition is repeatedly determined from the sensed values and a first algorithm. The first algorithm is preferably such that the rate of chlorine addition varies progressively with progressive variations in the sensed value, for example so that the chlorine addition rate is roughly proportional to the amount by which a value indicative of a desired chlorine level exceeds the sensed value. It has been found that, when producing the chlorine by electrolysis, progressively varying the chlorine production rate produces less erosion of the plates in the electrolyser than switching between maximum and zero chlorine production.

Preferably, samples of the water are repeatedly mixed with the spectrophotometric reagent, and the mixtures are repeatedly spectrophotometrically sensed. The chloramine sensing results are repeatedly compared with a first condition (for example whether or not the actual chloramine level exceeds a particular level); and, in dependence upon that comparison, the method can change to a second mode (which can be thought of as a shock-dosing mode) in which the rate of chlorine addition is determined differently. For example, in the second mode, the rate of chlorine addition may determined from the sensed values and a second algorithm (for example so that the chlorine addition rate is roughly proportional to the amount by which a value indicative of a second, higher chlorine level exceeds the sensed value). Alternatively, in the second mode, the rate of chlorine addition may set to a maximum, so that the chlorine level increases as quickly as possible.

Preferably, the method changes from the second mode back to the first mode in dependence upon a comparison between the sensed values and a second condition (for example that the sensed value exceeds a value indicative of a particular chlorine level).

Preferably, when in the first mode of operation, the sensed values are compared with a third condition (for example that the sensed value is less is less than a value indicative that the chlorine level is particularly low); and in dependence upon that comparison, the method can change to the second mode. This can be used to shock-dose the pool water when the chlorine level is low, e.g. due to a high bacteria algae overrun in the pool water.

The sensing of the value of a parameter dependent on the proportion of chlorine in the water preferably comprises mixing a sample of the water with a spectrophotometric reagent that is sensitive to chlorine; and spectrophotometrically sensing the mixture to produce a result dependent on the proportion of chlorine in the water.

The method preferably further includes: mixing a sample of the water with a spectrophotometric reagent that is sensitive to pH; spectrophotometrically sensing the mixture to produce a result dependent on the pH of the water; and adjusting the pH of the water in dependence upon that result.

Due to the use of spectrophotometry, the proportion of chlorine in the water and/or the pH of the water can also be accurately and reliably determined. A common spectrophotometer is preferably employed for the spectrophotometric sensing.

In accordance with a second aspect of the present invention, there is provided a system for monitoring and treating chlorinated swimming pool water in which chloramine may be present, the system comprising: means for sensing a value of a parameter of a sample of the water dependent on the proportion of chlorine in the water; means for adding chlorine to the water at a rate determined at least in part from the sensed value; means for mixing a sample of the water with a spectrophotometric reagent that is sensitive to chloramine; means for spectrophotometrically sensing the mixture to produce a result dependent on the proportion of chloramine in the water; and means for modifying the rate of the addition of chlorine to the water in dependence upon the chloramine sensing result. In use, the system of the second aspect of the invention therefore performs the method of the first aspect of the invention.

As an alternative to chlorination of swimming pool water, it is also known that silver ions can be used to kill bacteria in the water and that copper ions can be used as an algaecide. Copper and silver ions can be produced by electrolysis of the pool water using copper and silver anodes. It is desirable to keep the ion levels sufficiently high to produce the desired effect, but it is also desirable that the ion levels should not be higher than required so as not to cause unnecessary erosion of the expensive copper and silver anodes and unnecessary maintenance costs. Especially insofar as large public swimming pools are concerned, it is preferable for the ionisation of the pool water to be controlled automatically. However, difficulty arises in monitoring the ion levels in the pool water automatically, reliably and accurately. An aim of the third and fourth aspects of the invention, or least of specific embodiments of them, is to deal with this problem.

The third aspect of the invention relates to a method of monitoring and treating swimming pool water, the method comprising: sensing a value of a parameter of a sample of the water dependent on the proportion of copper ions in the water; adding copper ions to the water at a rate determined at least in part from the sensed copper ion value; sensing a value of a parameter of a sample of the water dependent on the proportion of silver ions in the water; and adding silver ions to the water at a rate determined at least in part from the sensed silver ion value. In accordance with the third aspect of the invention, at least one, and preferably each, of the sensing steps comprises mixing the respective sample of the water with a spectrophotometric reagent that is sensitive to the respective ions, and spectrophotometrically sensing the mixture to produce a result dependent on the proportion of the respective ions in the water. Due to the use of spectrophotometry, the proportion of copper and/or silver ions in the water can be accurately and reliably determined.

A common spectrophotometer is preferably employed for the spectrophotometric sensing of the copper ions and silver ions.

Although the method could be performed as a one-off, preferably samples of the water are repeatedly mixed with the respective spectrophotometric reagent, and the mixtures are repeatedly spectrophotometrically sensed.

The copper and/or silver ions are preferably added to the water by electrolysis of the water using a plate of the appropriate metal.

Preferably, the rate of respective ion addition is repeatedly determined from the respective sensed ion values and a respective algorithm. The respective algorithm is preferably such that the rate of ion addition varies progressively with progressive variations in the sensed value, for example so that the ion addition rate is roughly proportional to the amount by which a value indicative of a desired ion level exceeds the sensed ion value. It has been found that, when producing the ions by electrolysis, progressively varying the ion production rate produces less erosion of the plates in the electrolyser than switching between maximum and zero ion production.

In accordance with a fourth aspect of the present invention, there is provided a system for monitoring and treating swimming pool water, the system comprising: means for sensing a value of a parameter of a sample of the water dependent on the proportion of copper ions in the water; means for adding copper ions to the water at a rate determined at least in part from the sensed copper ion value; means for sensing a value of a parameter of a sample of the water dependent on the proportion of silver ions in the water; and means for adding silver ions to the water at a rate determined at least in part from the sensed silver ion value; wherein at least one of the sensing means comprises means for mixing the respective sample of the water with a spectrophotometric reagent that is sensitive to respective ions, and means for spectrophotometrically sensing the mixture to produce a result dependent on the proportion of the respective ions in the water. In use, the system of the fourth aspect of the invention therefore performs the method of the third aspect of the invention.

Specific embodiments of the present invention will now be described, purely by way of example, with reference to the accompanying drawings, in which:
- Figure 1: is a schematic drawing of a swimming pool and a first embodiment of a system for monitoring and treating the pool water;
- Figure 2: is a schematic drawing of a metering unit used in the system of Figure 1;
- Figure 3: is a flow diagram of a spectrophotometric cycle performed by the system of Figures 1 and 6;
- Figure 4: is a mode diagram of the modes of operation of the system of Figure 1;
- Figures 5A-D: are flow diagrams showing the operation of the system of Figure 1 in its different modes;
- Figure 6: is a schematic drawing of a swimming pool and a second embodiment of a system for monitoring and treating the pool water;
- Figure 7: is a schematic drawing of a metering unit used in the system of Figure 6;
- Figure 8: is a mode diagram of the modes of operation of the system of Figure 6; and
- Figures 9A-C: are flow diagrams showing the operation of the system of Figure 6 in its different modes; and
- Figure 10: is an isometric view of a device that may be added to the system of Figures 6 to 9D, or the system of Figures 1 to 5D.

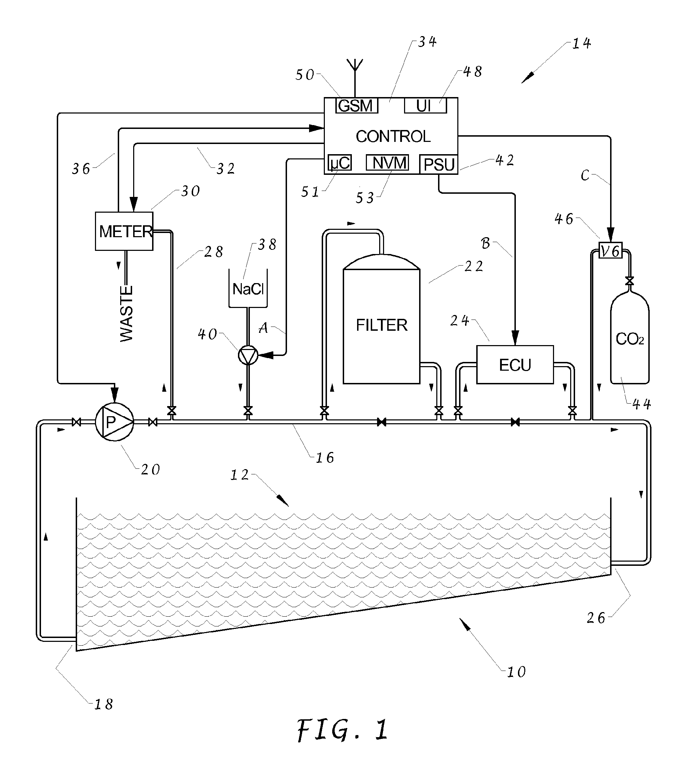

Referring to Figure 1, a swimming pool 10 with chlorinated water 12 has a first embodiment of monitoring and treating system 14 in a circuit 16 from a pool outlet 18, via a conventional pump 20, a conventional filter 22 and an electrolyser 24, to a pool inlet 26. The filter 22 and electrolyser 24 have bypass pipes and valves to enable them to be isolated from the circuit 16 for maintenance. A small-bore sampling pipe 28 leads from the circuit 16, after the pump 20, via a metering unit 30 to a waste.

The metering unit 30 receives control signals 32 from a control unit 34 and can supply measurement signals 36 to the control unit 34. A supply 38 of common salt (sodium chloride) or saline is connected to the circuit 16, after the sampling pipe 28, via a metering valve or pump 40 controlled by the control unit 34 (signal A). The electrolyser 24 is supplied with electricity (signal B) from a power supply unit 42 in the control unit 34. A supply 44 of carbon dioxide is connected to the circuit 16, after the electrolyser 24, via a metering valve 46 controlled by the control unit 34 (signal C). The control unit 34 includes a user interface 48 with which a user can switch the system 14 on and off, adjust various settings, and view displays indicating the operation of the system 14. The control unit 34 also has a mobile telephone unit 50 enabling a maintenance organisation remotely to check the operation of the system 14 and enabling the system 14 to call a predetermined telephone number or send an email in the event of a fault. The control unit 34 includes a microcontroller 49 which is programmed by software stored in non-volatile memory 51 periodically to read measurements from the metering unit 30 and, in dependence upon the measurements, to control: the salt pump 40 and therefore the level of salt in the water 12; the electrolyser 24 and therefore the level of chlorine in the water 12; and the carbon dioxide valve 46 and therefore the pH of the water 12.

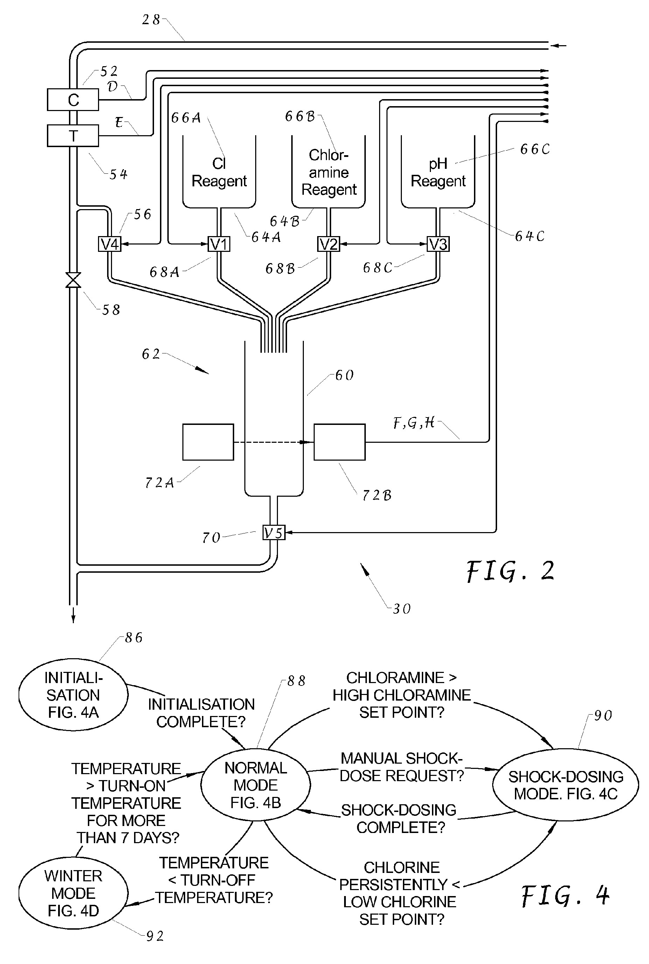

Referring now to Figure 2, in the metering unit 30, the sampling pipe 28 leads to the waste via: an electrical-conductivity sensor 52 which supplies to the control unit 34 a signal D indicative of conductivity and therefore the salinity of the pool water 12; a temperature sensor 54 which supplies to the control unit 34 a signal E indicative of the temperature of the pool water 12; a branch to a water metering valve 56; and a restrictor valve 58. The electrical-conductivity sensor 52 may comprise a pair of spaced electrodes in the water fed with a constant-current AC signal so that the AC voltage across the electrodes is proportional to the conductivity of the water. The temperature sensor may comprise a resistor with a significant temperature coefficient, or a semiconductor chip temperature sensor. The water metering valve 56 leads to a glass container 60 forming part of a spectrophotometer 62. The spectrophotometer 62 also includes supplies 64A-C of spectrophotometric reagents 66A-C for chlorine, chloramine and pH, respectively. Appropriate reagents can be obtained from The Tintometer Limited, SP4 7SZ, GB. Each reagent supply 64A-C leads via a respective metering valve 68A-C to the glass container 60. Each of the metering valves 56,68A-C is arranged such that, each time it is actuated, it supplies a predetermined quantity of water or reagent, as the case may be, to the container 60. The bottom of the glass container 60 has an outlet connected by a valve 70 to the waste after the restrictor valve 58. A spectrophotometer transmitter 72A and receiver 72B are disposed to opposite sides of the glass container 60. When the container 60 contains a mixture of pool water 12 and the reagent 66A-C for chlorine, chloramine or pH in a prescribed ratio (typically 10:1 water:reagent by volume), the receiver 72B produces a signal F, G or H, which is supplied to the control unit 34, dependent on the intensity of the light that passes from the transmitter 72A to the receiver 72B and indicative of, depending on the reagent, the level of chlorine or chloramine in, or of the pH of, the water.

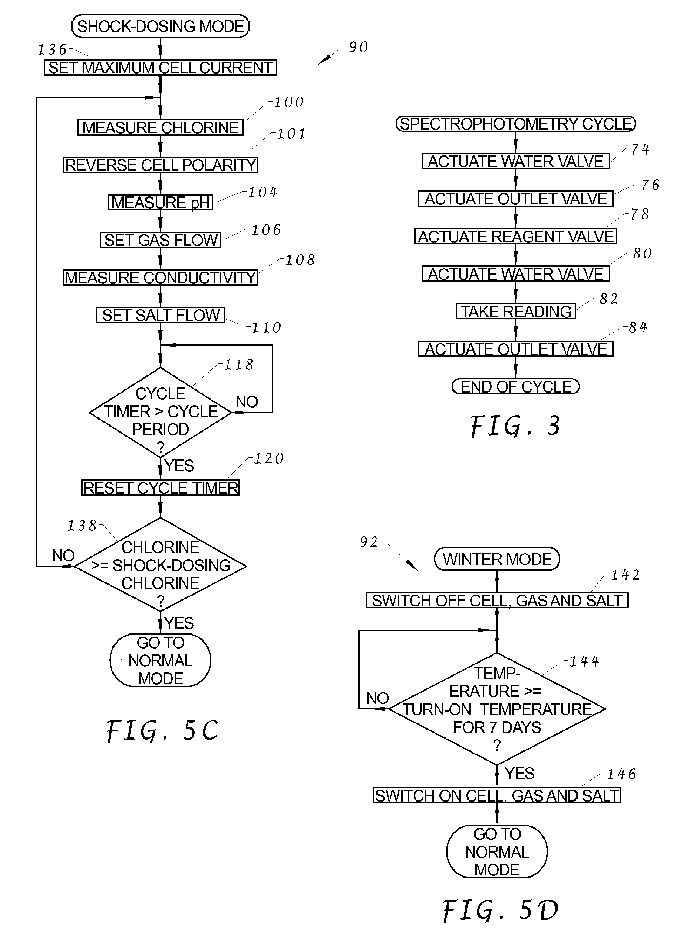

When the control unit 34 needs to take a measurement of the level of chlorine or chloramine in, or of the pH of, the water, it controls the metering unit 30 in the manner shown in Figure 3. First, the water metering valve 56 is actuated (step 74) so that the container 60 part-fills with a predetermined amount of water, and then the outlet valve 70 is actuated (step 76) for sufficient time to allow the container 60 to empty. The container 60 is therefore flushed out. The appropriate reagent metering valve 68A-C is then actuated (step 78) so that the appropriate small quantity of the appropriate reagent 66A-C is supplied to the container 60. The water metering valve 56 is then actuated (step 80) so that the container 60 part-fills with the predetermined larger amount of water, which mixes with the reagent. The signal F,G,H (for chlorine, chloramine or pH) from the spectrophotometer receiver 72B is then read (step 82) by the control unit 34. Then, the outlet valve 70 is actuated again (step 84) for sufficient time to allow the container 60 to empty.

It will therefore be noted that the control unit can set a number of parameters:
- A: the salt flow rate;
- B: the supply current to the electrolyser 24;
- C: the carbon dioxide flow rate
and it can sense a number of parameters:
- D: the salinity of the pool water;
- E: the temperature of the pool water;
- F: the chlorine level;
- G: the chloramine level; and
- H: the pH of the pool water.

The electrolyser 24 comprises a stack of twelve spaced-apart parallel plates contained in a housing through which the pool water flows. For simplicity of electrical connection, the end plates are connected to the power supply unit 42, but the ten intermediate plates float electrically. Accordingly, each intermediate plate is bipolar, with the faces of the plates which face towards the electrically more-positive end plate forming cathodes, and the faces of the plates which face towards the electrically more-negative end plate forming anodes. Each plate is formed from extruded titanium coated with a mixed metal oxide compound including ruthenium dioxide to promote chlorine production and reduce oxygen production. The housing and plates are arranged to cause exceptionally turbulent flow within the electrolyser 24, thus reducing the build-up of hydrogen bubbles on the plates and the improving the efficiency of chlorine generation.

The power supply unit 42 is powered by the mains and is of the switched-mode type producing variable substantially ripple-free DC which is supplied to the electrolyser. The output current B of the power supply unit 42 is controlled by the control unit 34 up to a maximum, in a prototype of the invention, of about 40 A, which required an output voltage of about 50 V. The polarity of the output current B can be reversed under control of the control unit 34, and in use the polarity is reversed periodically to prevent calcification of the plates of the electrolyser 24 and thus reduce maintenance and increase operational life of the electrolyser 24. When the electrolyser 24 is in use, the output current of the power supply unit 42 is maintained at a minimum of about 150 mA, even if no chlorine is called for, so as to maintain polarisation of the plates of the electrolyser 24.

The operation of the system 14 is shown, in overview, by the mode diagram of Figure 4. When first switched on, the system 14 commences in an 'initialisation' mode 86 in which various settings are read by the control unit 34 from non-volatile memory or from the user interface 48 and various timers are started. Once initialisation is complete, the system 14 changes to its 'normal' mode 88 in which it normally remains. However, if the chloramine level in the pool water 12 is found to be above a threshold (for example a trace is detected), or if the chlorine level in the pool water 12 is found to be persistently low, or if specifically requested by a user through the user interface 48, the system changes to a 'shock-dosing' mode 90, in which it remains until the chlorine level has risen to a predetermined level, whereupon the system 14 reverts to its normal mode 88. When in the normal mode 88, the system 14 can also change to a 'winter' mode 92 if the temperature of the pool water 12 falls below a predetermined temperature, and it then remains in the winter mode 92 until the temperature has stayed above a predetermined temperature for a week.

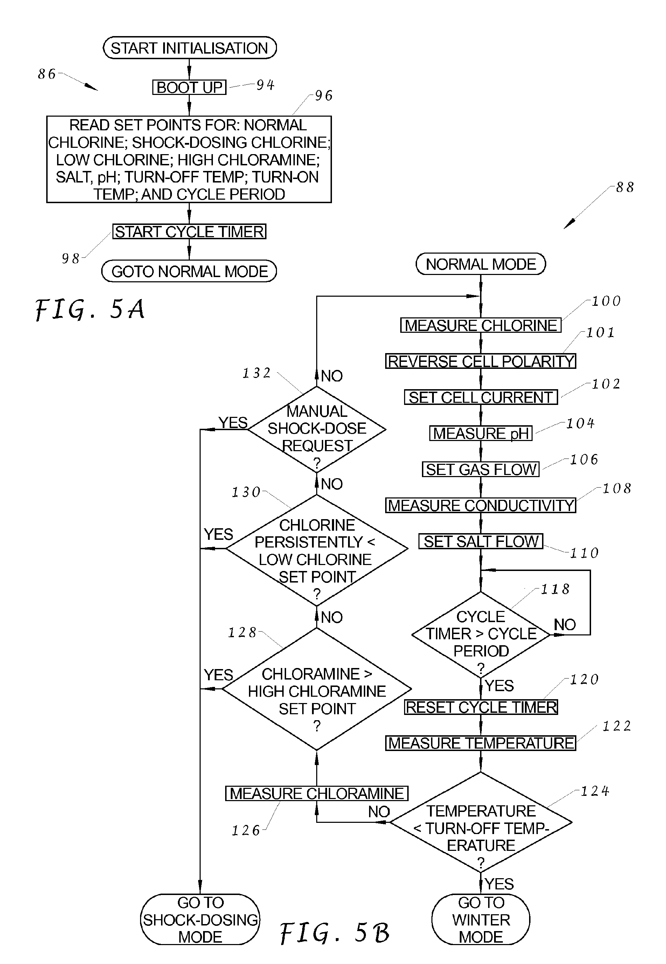

As shown more specifically in Figure 5A, in the initialisation mode 86, the microcontroller 51 initially boots-up (step 94) using code stored in the memory 53. It then reads (step 96) various parameters from the memory 53 or from the user interface 48, including:
- J: a set point for the chlorine level in the normal mode 88, typically 3 ppm;
- K: a set point for the chlorine level in the shock-dosing mode 90, typically 6 ppm;
- L: A threshold level for chlorine, used for determining when the system 14 will change to the shock-dosing mode 90, typically 2 ppm;
- M: A threshold level for chloramine, used for determining when the system 14 will change to the shock-dosing mode 90. Typically, the threshold level M for chloramine is the lowest level that the spectrophotometer 62 can reliably detect;
- O: A set point for conductivity or salinity, typically 3 ppt (parts per thousand) salinity;
- P: A set point for pH, typically 7.3;
- Q: A threshold temperature, used for determining when the system 14 will change to the winter mode 92, typically 10° C.
- R: A threshold temperature, used for determining when the system 14 will change back to the normal mode 88, typically 0° C.
- T: The cycle period for the spectrophotometric readings, typically 30 minutes.

The microcontroller 51 maintains a cycle timer V, and after step 96, the microcontroller starts (step 98) the cycle timer V. The system 14 then changes to the normal mode 88.

Referring now to Figure 5B, in the normal mode 88, the control unit 34 causes the spectrophotometer 62 to measure (step 100) the chlorine level F using the chlorine reagent 66A in the method described above with respect to Figure 3. The control unit 34 then reverses (step 101) the polarity of the output current B of the power supply unit 42; compares the measured chlorine level F with the chlorine set point J for the normal mode; and sets (step 102) the output current B in dependence upon the comparison. For example, the output current B may be proportional to the chlorine set point J less the measured chlorine level F, subject to a minimum of 150 mA. The control unit 34 then causes the spectrophotometer 62 to measure (step 104) the pH H of the pool water using the pH reagent 66C in the method described above with respect to Figure 3. The control unit 34 then compares the measured pH H with the pH set point P and sets (step 106) the flow rate C of the carbon dioxide valve 46 in dependence upon the comparison. For example, the flow rate C may be proportional to the pH set point P less the measured pH H. The control unit 34 then senses (step 108) the conductivity D of the pool water using the sensor 52 and compares the measured conductivity D with the conductivity set point 0 (or the salinity indicated by measured conductivity with the salinity set point), and sets (step 110) the flow rate A of the salt valve or pump 40 in dependence upon the comparison. For example, the flow rate A may be proportional to the salinity set point O less the measured salinity D. The control unit 34 then waits (step 118) until the cycle timer V has counted up to the cycle period T for the spectrophotometric readings, whereupon the control unit 34 resets (step 120) and restarts the cycle timer V. The control unit 34 then senses (step 122) the temperature E of the pool water using the sensor 54 and compares (step 124) the measured temperature E with the threshold temperature Q for entering the winter mode. If the measured temperature E is less than the threshold temperature Q, the system 14 changes to the winter mode 92, as will be described in more detail below. Otherwise, the control unit 34 then causes the spectrophotometer 62 to measure (step 126) the chloramine level G using the chlorine reagent 66B in the method described above with respect to Figure 3. The control unit 34 then performs up to three tests in steps 128,130,132, and if any of the tests 128,130,132 proves positive the system 14 changes to the shock-dosing mode 90, as will be described in more detail below. In step 128, the control unit 34 tests whether the chloramine level G measured in step 126 is greater than the threshold level M for chloramine, and if so the system 14 changes to the shock-dosing mode 90. In step 130, the control unit 34 tests whether the chlorine level F measured in step 100 is greater than the threshold level L for chlorine, or more preferably it may test whether the chlorine levels F measured in a predetermined number of steps 100 have persistently been greater than the threshold level L for chlorine, and if so the system 14 changes to the shock-dosing mode 90. In step 132, the control unit 34 tests whether a user has manually requested the shock-dosing mode via the user interface 48, and if so the system 14 changes to the shock-dosing mode 90. However, if all of the tests 128,130,132 prove negative, the flow loops back to step 100.

It will therefore be appreciated that, in the normal mode 88, the control unit 34 samples the required parameters every thirty minutes and provides closed-loop control over the chlorine level of the pool water 12 at e.g. 3 ppm, its salinity at e.g. 3 ppt and its pH at e.g. 7.3.

Referring now to Figure 5C, when the system 14 enters the shock-dosing mode 90, the control unit 34 sets (step 136) the supply current B to the electrolyser 24 to its maximum. The control unit 34 then performs a sequence of steps 100,101,104-120 which are identical to the steps 100-120 of the normal mode 88, except for the omission of step 102. The control unit 34 then tests (step 138) whether the chlorine level F measured in step 100 has risen to the set point K for chlorine in the shock-dosing mode. If so, the system 14 returns to the normal mode 88, as described above, but if not, the flow loops back to step 100.

It will be appreciated that, in the shock-dosing mode, the control unit 34 causes the system 14 to chlorinate the pool water 12 at its maximum rate and samples the chlorine level every thirty minutes until the chlorine level reaches e.g. 6 ppm. As an alternative, the chlorination rate could be reduced as the chlorine level nears the target level.

Referring now to Figure 5D, when the system 14 enters the winter mode 92, the control unit 34 initially turns-off (step 142) the electrolyser 24, carbon-dioxide valve 46 and salt valve or pump 40. The control unit 34 then repeatedly checks (step 144) whether the temperature has remained above the threshold temperature R for a predetermined time, such as seven days, whereupon the control unit 34 turns-on (step 146) the electrolyser 24, carbon-dioxide valve 46 and salt valve or pump 40, and then the system 14 changes back to the normal mode 88.

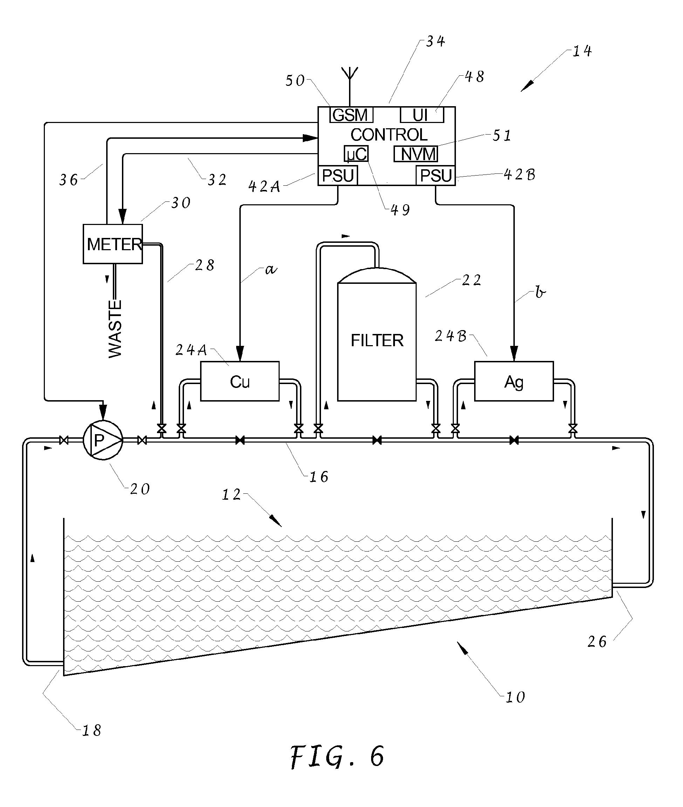

Referring to Figure 6, a swimming pool 10 with non-chlorinated water 12 has a second embodiment of monitoring and treating system 14 in a circuit 16 from a pool outlet 18, via a conventional pump 20, a first electrolyser 24A, a conventional filter 22 and a second electrolyser 24B, to a pool inlet 26. The filter 22 and electrolysers 24A,B have bypass pipes and valves to enable them to be isolated from the circuit 16 for maintenance. A small-bore sampling pipe 28 leads from the circuit 16, after the pump 20, via a metering unit 30 to a waste.

The metering unit 30 receives control signals 32 from a control unit 34 and can supply measurement signals 36 to the control unit 34. The electrolysers 24A,B are supplied with electricity (signals a,b) from respective power supply units 42A,B in the control unit 34. The control unit 34 includes a user interface 48 with which a user can switch the system 14 on and off, adjust various settings, and view displays indicating the operation of the system 14. The control unit 34 also has a mobile telephone unit 50 enabling a maintenance organisation remotely to check the operation of the system 14 and enabling the system 14 to call a predetermined telephone number or send an email in the event of a fault. The control unit 34 includes a microcontroller 49 which is programmed by software stored in non-volatile memory 51 periodically to read measurements from the metering unit 30 and, in dependence upon the measurements, to control the electrolysers 24A,B.

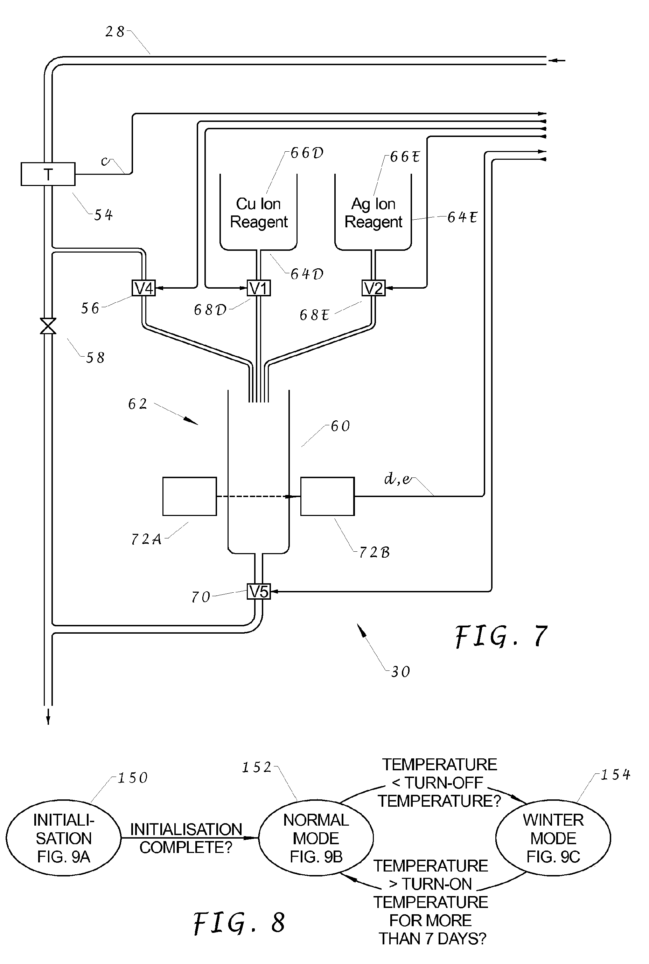

Referring now to Figure 7, in the metering unit 30, the sampling pipe 28 leads to the waste via a temperature sensor 54 which supplies to the control unit 34 a signal c indicative of the temperature of the pool water 12; a branch to a water metering valve 56; and a restrictor valve 58. The temperature sensor may comprise a resistor with a significant temperature coefficient, or a semiconductor chip temperature sensor. The water metering valve 56 leads to a glass container 60 forming part of a spectrophotometer 62. The spectrophotometer 62 also includes supplies 64D,E of spectrophotometric reagents 66D,E for copper ions and silver ions, respectively. Each reagent supply 64D,E leads via a respective metering valve 68D,E to the glass container 60. Each of the metering valves 56,68D,E is arranged such that, each time it is actuated, it supplies a predetermined quantity of water or reagent, as the case may be, to the container 60. The bottom of the glass container 60 has an outlet connected by a valve 70 to the waste after the restrictor valve 58. A spectrophotometer transmitter 72A and receiver 72B are disposed to opposite sides of the glass container 60. When the container 60 contains a mixture of pool water 12 and the reagent 66D,E for copper ions or silver ions in a prescribed ratio (typically 10:1 water:reagent by volume), the receiver 72B produces a signal d or e, which is supplied to the control unit 34, dependent on the intensity of the light that passes from the transmitter 72A to the receiver 72B and indicative of, depending on the reagent, the level of copper or silver ions in the water.

When the control unit 34 needs to take a measurement of the level of copper or silver ions in the water, it controls the metering unit 30 in the manner shown in Figure 3. First, the water metering valve 56 is actuated (step 74) so that the container 60 part-fills with a predetermined amount of water, and then the outlet valve 70 is actuated (step 76) for sufficient time to allow the container 60 to empty. The container 60 is therefore flushed out. The appropriate reagent metering valve 68D,E is then actuated (step 78) so that the appropriate small quantity of the appropriate reagent 66D,E is supplied to the container 60. The water metering valve 56 is then actuated (step 80) so that the container 60 part-fills with the predetermined larger amount of water, which mixes with the reagent. The signal d or e (for copper ions or silver ions) from the spectrophotometer receiver 72B is then read (step 82) by the control unit 34. Then, the outlet valve 70 is actuated again (step 84) for sufficient time to allow the container 60 to empty.

It will therefore be noted that the control unit set a number of parameters:
- a: the supply current to the electrolyser 24A; and
- b: the supply current to the electrolyser 24B
and it can sense a number of parameters:
- c: the temperature of the pool water;
- d: the copper ion level; and
- e: the silver ion level.

Each electrolyser 24A,B comprises a stack of twelve spaced-apart parallel plates contained in a housing through which the pool water flows. For simplicity of electrical connection, the end plates are connected to the respective power supply unit 42A,B, but the ten intermediate plates float electrically. Accordingly, each intermediate plate is bipolar, with the faces of the plates which face towards the electrically more-positive end plate forming cathodes, and the faces of the plates which face towards the electrically more-negative end plate forming anodes. Each plate in the electrolyser 24A is formed from copper, and each plate in the electrolyser 24B is formed from silver. The housing and plates are arranged to cause exceptionally turbulent flow within the electrolysers 24A,B, thus reducing the build-up of bubbles on the plates and the improving the efficiency of copper and silver ion generation.

The power supply units 42A,B are powered by the mains and are of the switched-mode type producing variable substantially ripple-free DC which is supplied to the respective electrolyser 24A,B. The output current of each power supply unit 42A,B is controlled by the control unit 34 up to a maximum, in a prototype of the invention, of about 5 A, which required an output voltage of about 5 V. The polarity of the output current can be reversed under control of the control unit 34, and in use the polarity is reversed periodically to prevent calcification of the plates of the electrolysers 24A,B and thus reduce maintenance and increase operational life of the electrolysers 24A,B. When the electrolysers 24A,B are in use, the output current of the power supply unit 42 is maintained at a minimum of about 4 mA, even if no ion production is called for, so as to maintain polarisation of the plates of the electrolysers 24A,B.

The operation of the system 14 is shown, in overview, by the mode diagram of Figure 8. When first switched on, the system 14 commences in an 'initialisation' mode 150 in which various settings are read by the control unit 34 from non-volatile memory or from the user interface 48 and a timer is started. Once initialisation is complete, the system 14 changes to its 'normal' mode 152 in which it normally remains. However, when in the normal mode 152, the system 14 can also change to a 'winter' mode 154 if the temperature of the pool water 12 falls below a predetermined temperature, and it then remains in the winter mode 154 until the temperature has stayed above a predetermined temperature for a week.

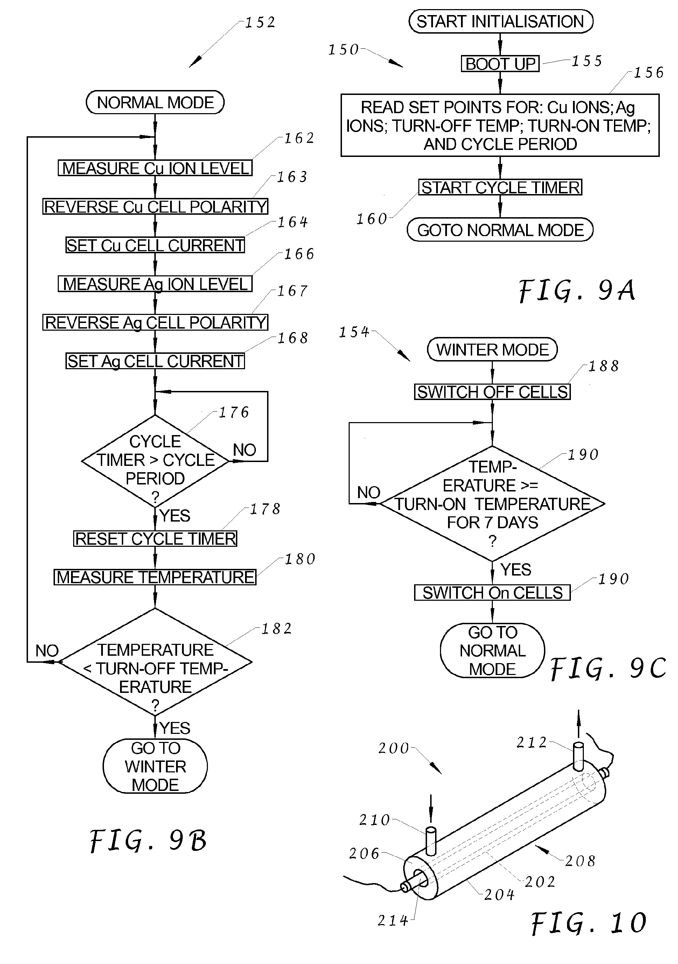

As shown more specifically in Figure 9A, in the initialisation mode 150, the microcontroller 51 initially boots-up (step 155) using code stored in the memory 53. It then reads (step 156) various parameters from the memory 53 or from the user interface 48, including:
- f: A set point for the copper ion level, for example 0.05 ppm, but more preferably 0.5 ppm;
- g: A set point for the silver ion level, for example 0.005 ppm, but more preferably 0.05 ppm;
- h: A threshold temperature, used for determining when the system 14 will change to the winter mode 154, typically 10° C.
- j: A threshold temperature, used for determining when the system 14 will change back to the normal mode 152, typically 0° C.
- m: The cycle period for the spectrophotometric readings, typically 2 hours.

The microcontroller 51 maintains a cycle timer O and, after step 156, the microcontroller starts (step 160) the cycle timer o. The system 14 then changes to the normal mode 152.

Referring now to Figure 9B, in the normal mode 152, the control unit 34 causes the spectrophotometer 62 to measure (step 162) the copper ion level d using the copper ion reagent 66D in the method described above with respect to Figure 3. The control unit 34 then reverses (step 163) the polarity of the output a of the copper ion power supply unit 42A; compares the measured copper ion level d with the copper ion set point f; and sets (step 164) the output current a of the copper ion power supply unit 42A in dependence upon the comparison. For example, the output current a may be proportional to the copper ion set point f less the measured copper ion level d, subject to a minimum of 4 mA. The control unit 34 then causes the spectrophotometer 62 to measure (step 166) the silver ion level e using the silver ion reagent 66E in the method described above with respect to Figure 3. The control unit 34 then reverses (step 167) the polarity of the output b of the silver ion power supply unit 42B; compares the measured silver ion level e with the silver ion set point g; and sets (step 168) the output current b of the silver ion power supply unit 42B in dependence upon the comparison. For example, the output current b may be proportional to the silver ion set point g less the measured silver ion level e, subject to a minimum of 4 mA. The control unit 34 then waits (step 176) until the cycle timer O has counted up to the cycle period m for the spectrophotometric readings, whereupon the control unit 34 resets (step 178) and restarts the cycle timer o. The control unit 34 then senses (step 180) the temperature c of the pool water using the sensor 54 and compares (step 182) the measured temperature c with the threshold temperature h for entering the winter mode. If the measured temperature c is less than the threshold temperature h, the system 14 changes to the winter mode 154, as will be described in more detail below. Otherwise, the flow then loops back to step 162.

It will therefore be appreciated that, in the normal mode 152, the control unit 34 samples the required parameters every two hours and provides closed-loop control over the copper ion level of the pool water 12 at e.g. 0.05 ppm but more preferably 0.5 ppm and its silver ion level at e.g. 0.005 ppm but more preferably 0.05 ppm.

Referring now to Figure 9C, when the system 14 enters the winter mode 154, the control unit 34 initially turns-off (step 188) the electrolysers 24A,B. The control unit 34 then repeatedly checks (step 190) whether the temperature has remained above the threshold temperature j for a predetermined time, such as seven days, whereupon the control unit 34 turns-on (step 192) the electrolysers 24A,B, and then the system 14 changes back to the normal mode 152.

Many modifications and developments may be made to the embodiments of the invention described above. For example, a device for treatment of the water by ultra-violet light may be added to the system of Figures 6 to 9C downstream of the silver electrolyser 24B or to the system of Figures 1 to 5D downstream of the electrolyser 24. Referring to Figure 10, this device 200 may comprise an coaxial inner and outer glass cylinders 202,204 which are joined at their ends by annular end pieces 206 to form a glass sleeve 208. At least the inner cylinder 202 has a high transmissivity to ultra-violet light. An inlet port 210 near one end of the outer cylinder 204 is connected to the outlet of the silver electrolyser 24B or the electrolyser 24, and an outlet port 212 near the other end of the outer cylinder 204 is connected to the pool inlet 26. In use, therefore, the pool water flows through the cylindrical space between the inner and outer cylinders 202,204 from the inlet port 210 to the outlet port 212. A high-definition ultraviolet fluorescent tube 214 extends through the inner cylinder 202 and is driven by the control unit 34 when the system 14 is active. The ultraviolet light emitted by the tube 214 therefore shines into the water in the glass sleeve 208 and acts to kill other microorganisms in the water and reduce the TVC (total viable count) of the water.

It should be noted that the embodiments of the invention have been described above purely by way of example and that many other modifications and developments may be made thereto within the scope of the present invention.

## Claims

1. A method of monitoring and treating swimming pool water, the method comprising:
sensing a value of a parameter of a sample of the water dependent on the proportion of copper ions in the water;
adding copper ions to the water at a rate determined at least in part from the sensed copper ion value;
sensing a value of a parameter of a sample of the water dependent on the proportion of silver ions in the water; and
adding silver ions to the water at a rate determined at least in part from the sensed silver ion value;
wherein at least one of the sensing steps comprises mixing the respective sample of the water with a spectrophotometric reagent that is sensitive to the respective ions, and spectrophotometrically sensing the mixture to produce a result dependent on the proportion of the respective ions in the water.

2. A method as claimed in claim 1, wherein both of the sensing steps comprise such mixing and spectrophotometric sensing.

3. A method as claimed in claim 2, wherein a common spectrophotometer is employed for the spectrophotometric sensing.

4. A method as claimed in any preceding claim, wherein samples of the water are repeatedly mixed with the respective spectrophotometric reagent, and the mixtures are repeatedly spectrophotometrically sensed.

5. A method as claimed in any preceding claim, wherein copper and/or silver ions are added to the water by electrolysis of the water using a plate of the appropriate metal.

6. A method as claimed in any preceding, wherein the rate of respective ion addition is repeatedly determined from the respective sensed ion values and a respective algorithm.

7. A method as claimed in claim 6, wherein the respective algorithm is such that the rate of ion addition varies progressively with progressive variations in the sensed value.

8. A method of monitoring and treating chlorinated swimming pool water in which chloramine may be present, the method comprising:
sensing a value of a parameter of a sample of the water dependent on the proportion of chlorine in the water;
adding chlorine to the water at a rate determined at least in part from the sensed value;
mixing a sample of the water with a spectrophotometric reagent that is sensitive to chloramine;
spectrophotometrically sensing the mixture to produce a result dependent on the proportion of chloramine in the water; and
modifying the rate of the addition of chlorine to the water in dependence upon the chloramine sensing result.

9. A method as claimed in claim 8, wherein salt is dissolved in the pool water and chlorine is added to the water by electrolysis of the salty water.

10. A method as claimed in claim 8 or 9, wherein values of the chlorine dependent parameter are repeatedly sensed, and the rate of the addition of chlorine is repeatedly determined.

11. A method as claimed in claim 10, wherein, in a first mode of operation, the rate of chlorine addition is repeatedly determined from the sensed values and a first algorithm,

12. A method as claimed in claim 11, wherein the first algorithm is such that the rate of chlorine addition varies progressively with progressive variations in the sensed value.

13. A method as claimed in any of claims 8 to 12, wherein samples of the water are repeatedly mixed with the spectrophotometric reagent, and the mixtures are repeatedly spectrophotometrically sensed.

14. A method as claimed in claim 13 when dependent on claim 11 or 12, wherein the chloramine sensing results are repeatedly compared with a first condition, and, in dependence upon that comparison, the method can change to a second mode in which the rate of chlorine addition is determined differently.

15. A method as claimed in any of claims 8 to 14, wherein the sensing of the value of a parameter dependent on the proportion of chlorine in the water comprises mixing a sample of the water with a spectrophotometric reagent that is sensitive to chlorine; and spectrophotometrically sensing the mixture to produce a result dependent on the proportion of chlorine in the water.
